# EUROPEAN PATENT SPECIFICATION

(11) **EP 2 430 119 B1**
(45) Date of publication and mention of the grant of the patent: **16.08.2017**
(21) Application number: 10769143.8
(22) Date of filing: 28.04.2010
(51) Int. Cl.: C01B 32/30, B09C 1/00, C05G 3/06, C09K 101/00, C05G 3/00, C05B 13/00, C05G 5/00, B05D 1/12, C05C 9/00, C09K 3/32

(54) **Method for enhancing the green colour of turf by using an aqueous suspension of activated carbon**
Verfahren zur Verbesserung der grünen Farbe von Rasen bei Verwendung von wässerige Suspension von Aktivkohle
Procédé d'amélioration de la couleur verte du gazon par utilisation d'une suspension aqueuse de charbon actif

(30) Priority: 28.04.2009 AU 2009901788
(43) Date of publication of application: 21.03.2012
(73) Proprietor: Eureka! Agresearch Pty Ltd, Altona, Victoria 3018 (AU)
(72) Inventor: PENTLAND, Philip Edward, Altona, Victoria 3018 (AU); MAHARAJ, Abhinetiri Kumari, Altona, Victoria 3018 (AU); FLYNN, Anthony Gerard, Altona, Victoria 3018 (AU)
(74) Representative: Tranter, Andrew David
(86) International application number: PCT/AU2010/000488
(87) International publication number: WO 2010/124329

(56) References cited:
- WO-A1-97/04864
- WO-A1-2004/010781
- JP-A- 2001 019 958
- JP-A- 2003 164 846
- US-A- 3 960 763
- US-A- 4 529 434
- US-A- 4 585 753

## Description

This invention relates to methods for enhancing the green colour of turf comprising providing concentrated aqueous suspensions of activated carbon and to their use in treating turf.

Concentrated aqueous suspensions of carbon can be diluted and sprayed onto grass or soil to remove or intercept organic pesticides or other deleterious organic compounds. Aqueous suspensions of carbon can also be applied to turf grass to create a greening effect.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each claim of this application.

JP 2001 019958A discloses a soil treating agent for controlling damage by continuous cropping of plants. The soil treating agent is obtained by dispersing active carbon in water with a dispersing agent.

US 4 529 434 discloses a method of increasing phosphorous uptake in plant tissues by applying to immature plants, as a foliar spray, an aqueous composition consisting of a mixture of polyphosphates and activated carbon wherein the polyphosphates are selected from the group consisting of polyphosphoric acid, potassium polyphosphate and ammonium polyphosphate and mixtures thereof.

WO 97/04864 discloses the use of activated charcoal granule compositions which, when dry spread and "watered-in" to a site, reduces undesirable biological activity of deleterious organic compounds.

There is a need to provide aqueous suspensions of activated carbon with high carbon loadings. Attempts to increase the carbon loading using conventional formulation strategies leads to the development of excessively high viscosity and/or clumping (over time) in the formulation, and both these features prohibit the uniform spray application of the product.

### Summary

In one aspect the invention provides a method for enhancing the green colour of turf comprising providing an aqueous concentrate for agricultural use for dilution and spray application comprising at least 25% by weight activated carbon in the aqueous concentrate, a surfactant and an anti-redeposition agent which is a pyrophosphate, wherein the aqueous concentrate has a viscosity of no more than 1500 centipoise; diluting the concentrate; and spraying the diluted concentrate of activated carbon onto turf; and wherein the activated carbon is removable under the influence of rain or a water spray.

The activated carbon aqueous concentrate may be prepared by a method comprising the steps of:
(a) forming a mixture comprising at least one surface active agent, water, and optionally a glycol and/or urea, with mixing;
(b) adding a first charge of activated carbon powder to the aqueous mixture with mixing;
(c) milling the mixture, for example with a ball mill or a bead mill or a disc mill to achieve a viscosity of no more than 600 centipoise; and
(d) adding a further charge of activated carbon powder to the milled mixture, with further mixing.

The method may further comprise one or more further steps selected from:
(a) optionally milling the composition following addition of the further charge;
(b) optionally adding another charge of activated carbon powder after said further charge with mixing; and
(c) optionally adding at least one selected from the group consisting of water, surface active agent and anti-deposition agent or like agent following said adding a further charge of activated carbon with mixing to achieve a viscosity of no more than 200 centipoise.

On a per-hectare basis, from 50 to 600 kg of activated carbon per hectare may be applied, preferably from about 150 to about 300 kg/ha.

Throughout the description and the claims of this specification the word "comprise" and variations of the word, such as "comprising" and "comprises" is not intended to exclude other additives, components, integers or steps.

### Detailed Description

The invention relates to an aqueous concentrate comprising activated carbon and its dilution and use in treating plants or soil by spray application. The aqueous activated carbon composition is particularly useful for treating ground cover such as turf. "Activated carbon" also called activated charcoal or activated coal is a form of carbon that has been processed to make it extremely porous and thus to have a very large surface area available for adsorption or chemical reactions. A gram of activated carbon can have a surface area in excess of generally at least 500 m<2>.Activated carbon does adsorb iodine very well and in fact the iodine number, mg/g, (ASTM D28 Standard Method test) is used as an indication of total surface area. Plant material includes but is not limited to seed, seedlings or more mature plants.

Turf refers to grass or other fine plants with their matted roots filling the upper stratum of soil and includes lawn. Non-limiting examples of grasses commonly used in turf include Bluegrass, Bentgrass, Ryegrasses, Fescues, Zoysiagrass, Bermudagrass, St. Augustine grass, Bahiagrass, Centipedegrass, Carpetgrass, Buffalograss, Grama grass, Elytrigia repens (Couch Grass).

It is preferred that activated carbon have an iodine number of at least 300mg/g, more preferably at least 500 mg/g and typically in the range of 500 to 1500 mg/g more preferably 500 to 1200 mg/g.

The term "turf' refers to a layer of earth covered with plant ground cover such as grass and a piece of such a layer cut from the soil and used to make a lawn.

The composition utilises a concentrate comprising at least 25%, preferably at least 30% by weight activated carbon in the aqueous concentrate. Preferably the aqueous concentrate composition comprises at least 40% activated carbon, more preferably at least 50% by weight activated carbon.

The viscosity of the aqueous activated carbon concentrate is no more than 1200 centipoise. Preferably the viscosity of the concentrate is no more than 800 centipoise. In one embodiment, the viscosity of the concentrate is at least about 400 centipoise and more preferably greater than 500 centipoise. A particularly preferred viscosity is in the range 500 to 800 centipoise.

Throughout this patent, the term "viscosity" is taken to refer to the Brookfield viscosity using a #2 spindle at 5.0 rpm, and measured at 16 deg C.

In one preference, the density of the concentrate is greater than 1.2 g/ml, more preferably greater than 1.25 g/ml and even more preferably greater than 1.3 g/ml/.

Preferably the activated carbon in the composition has an iodine index of at least 300 mg/g, more preferably at least 500, even more preferably at least 700, yet more preferably at least 900. The more a carbon is activated, the more it develops a large specific surface area and the greater its absorption capacity, and its iodine index.

The aqueous activated carbon composition will preferably comprise one or more conditioning agents that are dissolved in the aqueous phase, such as urea and/or a soluble material that acts as an anti-freeze. Urea may be present at 1% to 7% by weight in the final composition, more preferably at 2% to 5% by weight. Soluble material that acts as an antifreeze may comprise a glycol such as propylene glycols or other anti-freeze additives known to the art. In one preference, the anti-freeze agent may be present at 1% to 8% by weight of the final composition, more preferably at 2% to 5%.

The aqueous activated carbon composition will preferably comprise at least one surfactant such as those selected from the group of wetting agents, dispersing agents and/or stabilising agents. The composition of the invention may also comprise de-foaming agents. Such agents provide benefits such as increased milling speed, increased particle loading, decreased viscosity, decreased gel formation, and decreased free water content. Other benefits provided by such agents may include allowing water to displace air from internal and external hydrophobic surfaces, and facilitating the disintegration of aggregated moieties. The surfactants may be selected from the group of non-ionic and ionic surfactants.

Surfactants used as wetting agents may include but are not limited to salts of alkylbenzene sulphonates, alkyl sulphonates, alkyl sulphates, mono and dialkylsulphosuccinates, alkylnaphthalene sulphonates, lignin sulphonates, ether carboxylates, alkylethersulphates, alkyletherphosphates, non-ionic surfactants including alkylpolysaccharides, alcohol ethoxylates and alkylphenolethoxylates. Examples of various commercially available wetting agents are given in WO2006071887 (Reduced Foam Dispersions and Formulations Therefor), the contents of which are incorporated by reference. Dispersing agents include but are not limited to salts of alkylnaphthalene sulphonate condensates, salts of alkylphenol condensates, salts of sulphonated lignins, salts of polyacid resin copolymers, salts of polyphenol formaldehyde resins, salts of polyarylether sulphates such as tristyrylphenolethoxylate sulphate salts, alkoxylated alkylphenols and alcohols and block copolymers of ethyleneoxide and propyleneoxide. More examples are given in WO2006071887.

In one embodiment the composition includes a surfactant which acts as the dispersing agent. Such agents may be present in the formulation at 2% to 20% by weight, and may be polymeric anionic surfactants or other agents. Examples of such agents include alkylnaphthalenesulfonate-formaldehyde condensate, more preferably a sodium alkylnaphthalenesulfonate-formaldehyde condensate such as Supragil MNS/25, provided by Rhodia of Brisbane, Australia. Preferably the alkylnaphthalenesulfonate-formaldehyde condensate is present in the concentrate of the invention at between 20 and 200 g/kg, more preferably between 50 and 150 g/kg. Another class of surface active agents are defoaming agents. Defoaming agents include silicone based de-foamers, perfluoroalkyl defoamers and acetylenic diol de-foamers. Other examples of de-foaming agents are given in WO2006071887.

In a preferred embodiment, at least one of the surfactants is relatively water-insoluble. In one embodiment, at least one of the surfactants is water-insoluble and has a HLB value of less than about 9.Even more preferably, at least one of the surfactants comprises a nonylphenol ethoxlate such as Teric N4 (a nonylphenol ethoxylate having an average of 4 ethoxy groups per mole, sold by Huntsman chemicals of Melbourne, Australia.

In one embodiment, the composition comprises an agent selected from the set comprising anti-deposition agents, anti-greying agents, de-flocculating agents. Many of such agents are used in the formulation of solid and liquid laundry powders, and act to prevent the adhesion of particulate material to a substrate. In one preference, said agent is selected from the set comprising polyphosphates, pyrophosphates, carboxlated proteins, carboxymethyl cellulose, polyacrylates, and polymethacrylates. More preferably said agent is a polyphosphate or pyrophosphate, even more preferably a potassium salt or a mixed salt comprising potassium. A particularly preferred agent is tetrasodium pyrophosphate, which may be present in the range of from 2 % to 25% by weight of the final concentrate, preferably in the range of from 5% to 15%.

After application of the diluted concentrate to turf, the activated carbon particles contained therein need to be removable under the influence of rain or a water spray. The greening effect arising from the application of the diluted concentrate to turf may be established by comparing the original turf to turf that (a) has been treated with the diluted concentrate; (b) about 5 minutes after treatment, has been sprayed with water to remove the carbon from the green plant matter; and (c) has been left for a period of time after carbon removal, for example 3 days.

The invention also provides a method for removing or intercepting deleterious organic components, comprising spraying an aqueous suspension of activated carbon onto soil or plants or seed beds. The aqueous suspension of activated carbon may be made by taking a concentrated suspension of activated carbon and diluting said suspension in spray water.

The invention also provides a method for enhancing the green colour of turf comprising (preferably diluting a concentrate as described above) spraying an aqueous suspension of activated carbon onto turf at an application rate in the range of from 50kg to 600 kg carbon/ha, pref 100kg to 400 kg carbon/ha. In one preference, the aqueous suspension of activated carbon may be made by taking a concentrated suspension of activated carbon and diluting said suspension in spray water.

The invention will now be described with reference to the following examples. It is to be understood that the examples are provided by way of illustration of the invention and that they are in no way limiting to the scope of the invention.

### EXAMPLES:

The following materials and equipment were used in the examples:
Activated charcoal powder, 99% sub 300 microns, iodine index greater than 800mg/g, was provided by Redox of Melbourne Australia.

Teric N4, nonylphenol ethoxylate 4EO, provided by Huntsman, Melbourne Australia.

Antifoam was a silicone type material sold as Gensil 2030 by Rhodia of Brisbane, Australia.

Propylene glycol was provided by Redox of Melbourne Australia.

Urea was provided by Incitec/Pivot of Melbourne Australia.

Supragil MNS/25, sodium alkylnaphthalenesulfonate-formaldehyde condensate, manufactured by Rhodia.

Tetra Potassium Pyrophosphate (TKPP), provided by Albright and Wilson, Melbourne, Australia.

Dispersant mixer (Dispermat N1 made by VMA - Getzmann GMBH of Reichshof, W.Germany, serial no 12459092).

Dyno mill (WAB Dynomil, made by Willy A Bachofen of Basel, Switzerland Multi-lab, 89 kg, No 020420, built 2002).

### Example 1: 500 g/l Activated Carbon Suspension

| **Ingredient** | **Amount (per 1 kg)** | **Amount (g/L)** | **Function** |
|---|---|---|---|
| Activated Charcoal | 381.9 | 500.00 | Active |
| Urea | 23.9 | 31.25 | Wetter |
| Supragil MNS/25 | 100.0 | 130.92 | Dispersant |
| Propylene Glycol | 28.0 | 36.66 | Antifreeze |
| Antifoam | 4.0 | 5.24 | Reduce Foam |
| Water | 415.2 | 543.60 | Continuous Phase |
| Teric N4 | 47.0 | 61.53 | Thickener/Dispersant |
| Total | 100.0 | 1309.20 | |

### Method of preparation:

1. 100.0 g Supragil MNS/25, 28.0 g propylene glycol, 4.0 g antifoam and 23.9 g urea were added to 415.2 g of tap water and stirred with a Dispermat mixer to form a brown solution.
2. 300 g of activated charcoal powder was gradually added to the brown solution resulting in a black suspension with a viscosity of 630 cP (spindle # 2, 5.0 RPM, 16°C).
3. The suspension was passed through a small Dyno mill under the following conditions:
   Glass chamber, 0.8 -1.0 mm beads, mill speed 1.0, pump speed 1.2, milling temperature ≤ 35 °C.

   The resulting milled suspension showed significantly lower viscosity (viscosity = 60 cP).
4. 41.9 g of activated charcoal was added to the milled suspension, increasing the viscosity to 600 cP.
5. The suspension was milled again under the same milling conditions and its resulting viscosity was 210 cP.
6. The remaining 40 g of activated carbon was added to the suspension (viscosity = 948 cP).
7. 47.0 g of teric N4 was added to the suspension and the suspension was then stirred to uniformity with a Dispermat mixer. The viscosity of the final suspension was 612 cP.
8. The specific gravity of the final suspension concentrate was 1.3092 g/ml and its pH when diluted to 1% w/v in tap water was pH = 8.90 at 16.8 °C.

### Example 2:

| **Ingredient** | **Amount** (**g**/**L**) | **Function** |
|---|---|---|
| Activated Charcoal | 500.00 | Active **500 g/l Activated Carbon Suspension** |
| Urea | 31.25 | Wetter |
| Supragil MNS/25 | 130.92 | Dispersant |
| Propylene Glycol | 30.0 | Antifreeze |
| Antifoam | 5.24 | Reduce Foam |
| Water | 450.0 | Continuous Phase |
| Tetra-potassium pyrophosphate | 200.0 | |
| Total | 1347.41 | |

### Method of preparation:

1. 100.0 g Supragil MNS/25, propylene glycol, 4.0 g antifoam and urea were added to tap water and stirred with a Dispermat mixer to form a brown solution.
2. 300 g of activated charcoal powder was gradually added to the brown solution resulting in a black suspension.
3. The suspension was passed through a small Dyno mill under the following conditions:
   Glass chamber, 0.8 -1.0 mm beads, mill speed 1.0, pump speed 1.2, milling temperature ≤ 35 °C.

   The resulting milled suspension showed significantly lower viscosity (viscosity = 60 cP).
4. 41.9 g of activated charcoal was added to the milled suspension.
5. The suspension was milled again under the same milling conditions.
6. The remaining 40 g of activated carbon was added to the suspension.
7. Tetra-potassium pyrophosphate (a laundry detergent builder) and the suspension was then stirred to uniformity with a Dispermat mixer.

### Example 3: Greening study

50 g of concentrate made as described in example 1 was added to 200g of tap water, and after mixing the dilute material was sprayed onto stressed couch grass showing yellow colour in patches. The application rates were 100 litres/ha and 200 litres/ha, and after application of the carbon, there was a uniform distribution of dark colouring throughout the treated turf. After 5 minutes, the carbon was washed from the leaves with water sprayed from a hose. This led to carbon being moved from the leaves into the root zone. 3 days late, the treated couch grass plots were compared with an untreated control. Both treated plots of couch grass were found to be uniformly green, whereas the untreated control continued to show yellow colour in patches.

### Example 4

Concentrate made up as in Example 2 was diluted by addition of 1 part to 4 parts of water with mixing and the dilute material was sprayed onto sports grounds. After 5 minutes the carbon was washed from the grass with water sprayed from a hose. The removal of the dark colour associated with carbon was more readily achieved than in Example 3. Three days later treated and untreated grass plots were compared. The treated grass plots were greener and were more uniformly coloured than the untreated plots.

## Claims

1. A method for enhancing the green colour of turf comprising providing an aqueous concentrate for agricultural use for dilution and spray application comprising at least 25% by weight activated carbon in the aqueous concentrate, a surfactant and an anti-redeposition agent which is a pyrophosphate, wherein the aqueous concentrate has a viscosity of no more than 1500 centipoise; diluting the concentrate; and spraying the diluted concentrate of activated carbon onto turf; and wherein the activated carbon is removable under the influence of rain or water spray.

2. A method according to claim 1 wherein the diluted concentrate is applied at a rate in the range of from 50 to 600 kg of activated carbon per hectare.

3. A method according to any one of the previous claims wherein the diluted concentrate is applied at a rate in the range of from 150 to 300 kg of activated carbon per hectare.

4. A method according to any one of the previous claims wherein the aqueous concentrate comprises at least 30% (preferably at least 40%) by weight of activated carbon based on the weight of the aqueous concentrate.

5. A method according to any one of the previous claims wherein the viscosity of the concentrate composition is in the range of from 400 to 800 centipoise.

6. A method according to any one of the previous claims wherein the concentrate comprises 1 - 7% urea (preferably 2 - 5% urea) by weight of the concentrate composition.

7. A method according to any one of the previous claims wherein the concentrate comprises a polymeric anionic surfactant.

8. A method according to any one of the previous claims wherein the concentrate comprises an anionic surfactant which is a condensate of naphthalene sulfonate in an amount of from 2% to 20% (preferably from 5% to 15%) by weight of the concentrate composition.

9. A method according to any one of the previous claims wherein the concentrate composition comprises an agent selected from the set comprising anti-deposition agents, and anti-greying agents.

10. A method according to any one of the previous claims, wherein the anti-redeposition agent comprises tetrapotassium pyrophosphate in an amount in the range of from 2% to 25% by weight of the concentrate composition.

11. A method according to claim 10, wherein the tetrapotassium pyrophosphate is present in an amount of from 5% to 15% by weight of the concentrate composition.

12. A method according to any one of the previous claims wherein the turf is selected from grasses, preferably selected from the group consisting of Bluegrass, Bentgrass, Ryegrasses, Fescues, Zoysiagrass, Bermudagrass, St. Augustine grass, Bahiagrass, Centipedegrass, Carpetgrass, Buffalograss, Grama grass, Elytrigia repens (Couch Grass).

13. A method according to any one of the previous claims wherein the activated carbon aqueous concentrate is prepared by a method comprising the steps of:
(a) forming a mixture comprising at least one surface active agent, water, and optionally a glycol and/or urea, with mixing;
(b) adding a first charge of activated carbon powder to the aqueous mixture with mixing;
(c) milling the mixture to achieve a viscosity of no more than 600 centipoise; and
(d) adding a further charge of activated carbon powder to the milled mixture, with further mixing.

14. A method according the claim 13 further comprising one or more further steps selected from:
(a) milling the composition following addition of the further charge;
(b) adding another charge of activated carbon powder after said further charge with mixing; and
(c) adding at least one selected from the group consisting of water, surface active agent and anti-deposition agent or like agent following said adding a further charge of activated carbon with mixing to achieve a viscosity of no more than 1200 centipoise.

## Patentansprüche

1. Verfahren zum Verstärken der grünen Farbe von Rasen, bei dem man ein wässriges Konzentrat für die landwirtschaftliche Verwendung für die Verdünnungs- und Spritzapplikation bereitstellt, das mindestens 25 Gew. -% Aktivkohle in dem wässrigen Konzentrat, ein Tensid und ein Antiwiederablagerungsmittel, wenn es sich um ein Pyrophosphat handelt, umfasst, wobei das wässrige Konzentrat eine Viskosität von nicht mehr als 1500 Zentipoise aufweist; das Konzentrat verdünnt; und das verdünnte Aktivkohlekonzentrat auf Rasen spritzt; und wobei die Aktivkohle unter Einwirkung von Regen oder Spritzung mit Wasser entfernbar ist.

2. Verfahren nach Anspruch 1, wobei das verdünnte Konzentrat in einer Aufwandmenge im Bereich von 50 bis 600 kg Aktivkohle pro Hektar appliziert wird.

3. Verfahren nach einem der vorhergehenden Ansprüche, wobei das verdünnte Konzentrat in einer Aufwandmenge im Bereich von 150 bis 300 kg Aktivkohle pro Hektar appliziert wird.

4. Verfahren nach einem der vorhergehenden Ansprüche, wobei das wässrige Konzentrat mindestens 30 Gew.-% (vorzugsweise mindestens 40 Gew.-%) Aktivkohle in Bezug auf das Gewicht des wässrigen Konzentrats umfasst.

5. Verfahren nach einem der vorhergehenden Ansprüche, wobei die Viskosität der Konzentratzusammensetzung im Bereich von 400 bis 800 Zentipoise liegt.

6. Verfahren nach einem der vorhergehenden Ansprüche, wobei das Konzentrat 1 - 7 Gew. -% Harnstoff (vorzugsweise 2 - 5 Gew. -% Harnstoff) der Konzentratzusammensetzung umfasst.

7. Verfahren nach einem der vorhergehenden Ansprüche, wobei das Konzentrat ein polymeres anionisches Tensid umfasst.

8. Verfahren nach einem der vorhergehenden Ansprüche, wobei das Konzentrat ein anionisches Tensid, bei dem es sich um ein Naphthalinsulfonatkondensat handelt, in einer Menge von 2 Gew.-% bis 20 Gew.-% (vorzugsweise 5 Gew.-% bis 15 Gew.-%) der Konzentratzusammensetzung umfasst.

9. Verfahren nach einem der vorhergehenden Ansprüche, wobei die Konzentratzusammensetzung ein Mittel ausgewählt aus der Gruppe umfassend Antiablagerungsmittel und Antivergrauungsmittel umfasst.

10. Verfahren nach einem der vorhergehenden Ansprüche, wobei das Antiwiederablagerungsmittel Tetrakaliumpyrophosphat in einer Menge im Bereich von 2 Gew.-% bis 25 Gew.-% der Konzentratzusammensetzung umfasst.

11. Verfahren nach Anspruch 10, wobei das Tetrakaliumpyrophosphat in einer Menge von 5 Gew.-% bis 15 Gew.-% der Konzentratzusammensetzung vorliegt.

12. Verfahren nach einem der vorhergehenden Ansprüche, wobei der Rasen aus Gräsern ausgewählt ist und vorzugsweise aus der Gruppe bestehend aus Rispengras, Straußgras, Weidelgräsern, Schwingel, Zoysia-Gras, Bermuda-Gras, St. Augustine-Gras, Bahia-Gras, Centipede-Gras, Carpet-Gras, Buffalo-Gras, Grama-Gras, Elytrigia repens (Quecke) ausgewählt ist.

13. Verfahren nach einem der vorhergehenden Ansprüche, wobei das wässrige Aktivkohlekonzentrat nach einem Verfahren hergestellt wird, dass die folgenden Schritte umfasst:
(a) Bilden einer Mischung umfassend mindestens ein Tensid, Wasser und gegebenenfalls ein Glykol und/oder Harnstoff, unter Mischen;
(b) Zugeben einer ersten Charge Aktivkohlepulver zu der wässrigen Mischung, unter Mischen;
(c) Mahlen der Mischung, um zu einer Viskosität von nicht mehr als 600 Zentipoise zu gelangen; und
(d) Zugeben einer weiteren Charge Aktivkohlepulver zu der gemahlenen Mischung, unter weiterem Mischen.

14. Verfahren nach Anspruch 13, das weiterhin einen oder mehrere weitere Schritte, ausgewählt aus den Folgenden, umfasst:
(a) Mahlen der Zusammensetzung nach Zugabe der weiteren Charge;
(b) Zugabe einer weiteren Charge Aktivkohlepulver nach der weiteren Charge, unter Mischen; und
(c) Zugeben von mindestens einem Element aus der Gruppe bestehend aus Wasser, Tensid und Antiablagerungsmittel oder einem ähnlichen Mittel nach dem Zugeben einer weiteren Charge Aktivkohle, unter Mischen, um zu einer Viskosität von nicht mehr als 1200 Zentipoise zu gelangen.

## Revendications

1. Méthode destinée à améliorer la couleur verte du gazon, comprenant la fourniture d'un concentré aqueux pour une utilisation agricole pour une dilution et application par pulvérisation, comprenant au moins 25% en poids de charbon actif dans le concentré aqueux, un agent tensioactif et un agent anti-redéposition qui est un pyrophosphate, où le concentré aqueux possède une viscosité d'au plus 1500 centipoises ; la dilution du concentré ; et la pulvérisation du concentré dilué de charbon actif sur le gazon ; et où le charbon actif peut être éliminé par influence de la pluie ou d'une pulvérisation d'eau.

2. Méthode selon la revendication 1, dans laquelle le concentré dilué est appliqué à un taux dans la plage allant de 50 à 600 kg de charbon actif par hectare.

3. Méthode selon l'une quelconque des revendications précédentes, dans laquelle le concentré dilué est appliqué à un taux dans la plage allant de 150 à 300 kg de charbon actif par hectare.

4. Méthode selon l'une quelconque des revendications précédentes, dans laquelle le concentré aqueux comprend au moins 30% (préférablement au moins 40%) en poids de charbon actif, sur la base du poids du concentré aqueux.

5. Méthode selon l'une quelconque des revendications précédentes, dans laquelle la viscosité de la composition de concentré se trouve dans la plage allant de 400 à 800 centipoises.

6. Méthode selon l'une quelconque des revendications précédentes, dans laquelle le concentré comprend 1-7% d'urée (préférablement 2-5% d'urée) en poids de la composition de concentré.

7. Méthode selon l'une quelconque des revendications précédentes, dans laquelle le concentré comprend un agent tensioactif anionique polymère.

8. Méthode selon l'une quelconque des revendications précédentes, dans laquelle le concentré comprend un agent tensioactif anionique qui est un condensat de sulfonate de naphtalène selon une quantité allant de 2% à 20% (préférablement de 5% à 15%) en poids de la composition de concentré.

9. Méthode selon l'une quelconque des revendications précédentes, dans laquelle la composition de concentré comprend un agent choisi dans le groupe constitué par les agents anti-redéposition, et les agents anti-grisonnement.

10. Méthode selon l'une quelconque des revendications précédentes, dans laquelle l'agent anti-redéposition comprend du pyrophosphate de tétrapotassium selon une quantité dans la plage allant de 2% à 25% en poids de la composition de concentré.

11. Méthode selon la revendication 10, dans laquelle le pyrophosphate de tétrapotassium est présent selon une quantité allant de 5% à 15% en poids de la composition de concentré.

12. Méthode selon l'une quelconque des revendications précédentes, dans laquelle le gazon est choisi parmi les graminées, de préférence choisi dans le groupe constitué par les pâturins, les agrostides, les ray-grass, les fétuques, les graminées de type Zoysia, les cynodons, l'herbe de St-Augustin, l'herbe Bahia, les herbes de type herbes mille-pattes, les herbes du genre *Axonopus,* l'herbe aux bisons, les herbes du genre *Bouteloua, Elytrigia repens* (chiendent officinal).

13. Méthode selon l'une quelconque des revendications précédentes, dans laquelle le concentré aqueux de charbon actif est préparé par une méthode comprenant les étapes consistant à :
(a) former un mélange comprenant au moins un agent tensioactif, de l'eau, et éventuellement un glycol et/ou de l'urée, sous agitation ;
(b) ajouter une première charge de poudre de charbon actif au mélange aqueux, sous agitation ;
(c) broyer le mélange afin d'obtenir une viscosité d'au plus 600 centipoises ; et
(d) ajouter une charge supplémentaire de poudre de charbon actif au mélange broyé, sous agitation supplémentaire.

14. Méthode selon la revendication 13, comprenant en outre une ou plusieurs autres étapes choisies parmi :
(a) le broyage de la composition après addition de la charge supplémentaire ;
(b) l'addition d'une autre charge de poudre de charbon actif après ladite charge supplémentaire, sous agitation ; et
(c) l'addition d'au moins un élément choisi dans le groupe constitué par de l'eau, un agent tensioactif et un agent anti-redéposition ou un agent similaire, après ladite addition d'une charge supplémentaire de charbon actif sous agitation, afin d'obtenir une viscosité d'au plus 1200 centipoises.
